(19) Europäisches Patentamt
European Patent Office
Office européen des brevets

(11) **EP 2 200 736 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(21) Anmeldenummer: **08836804.8**

(22) Anmeldetag: **26.09.2008**

(51) Int Cl.:
*B01J 8/06* (2006.01)    *B01J 19/24* (2006.01)
*B01J 19/30* (2006.01)    *B01J 19/32* (2006.01)
*B01J 23/89* (2006.01)    *B01J 35/02* (2006.01)
*B01J 35/04* (2006.01)    *B01J 37/02* (2006.01)
*C04B 35/111* (2006.01)    *C04B 35/14* (2006.01)
*B29C 67/00* (2006.01)

(86) Internationale Anmeldenummer:
**PCT/EP2008/062956**

(87) Internationale Veröffentlichungsnummer:
**WO 2009/047141 (16.04.2009 Gazette 2009/16)**

(54) **VERFAHREN ZUR HERSTELLUNG VON FORMKÖRPERN MIT KATALYTISCHEN EIGENSCHAFTEN ALS REAKTOREINBAUTEN**

PROCESS TO PRODUCE MOULDED BODIES WITH CATALYTIC PROPERTIES AS REACTOR FITTINGS

PROCÉDÉ DE PRÉPARATION DE CORPS FAÇONNÉS DOTÉS DE PROPRIÉTÉS CATALYTIQUES COMME ÉLÉMENTS DE RÉACTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.10.2007 EP 07118050**

(43) Veröffentlichungstag der Anmeldung:
**30.06.2010 Patentblatt 2010/26**

(73) Patentinhaber: **BASF SE**
**67056 Ludwigshafen am Rhein (DE)**

(72) Erfinder:
- **KASHANI-SHIRAZI, Nawid**
  **68549 Ilvesheim (DE)**
- **WLOKA, Veronika**
  **68163 Mannheim (DE)**
- **GERLINGER, Wolfgang**
  **67117 Limburgerhof (DE)**
- **SCHMIDT, Andrea**
  **67059 Ludwigshafen (DE)**
- **HEINEN, Kerstin**
  **64653 Lorsch (DE)**
- **KOLLENBERG, Wolfgang**
  **50321 Brühl (DE)**

(56) Entgegenhaltungen:
EP-A- 0 805 146       WO-A-2006/045744
DE-C- 672 655         US-A- 4 017 347

- **KNITTER R., LIAUW M.A: "Ceramic microreactors for heterogeneously catalysed gas-phase reactions" LAB CHIP, Bd. 4, 3. Mai 2004 (2004-05-03), Seiten 378-383, XP002512602 Gefunden im Internet: URL:http://www.rsc.org/ej/LC/2004/b403361b .pdf>**
- **SCHMITT C., AGAR D.W. ET AL.: "Ceramic plate heat exchanger for heterogeneous gas-phase reactions" CHEM. ENG. TECHNOL., Bd. 28, Nr. 3, 7. März 2005 (2005-03-07), Seiten 337-343, XP002512603 Gefunden im Internet: URL:http://www3.interscience.wiley.com/cgi -bin/fulltext/110425976/PDFSTART>**
- **KNITTER R., GÖHRING D. ET AL.: "Microfabrication of ceramic microreactors" MICROSYSTEM TECHNOLOGIES, Bd. 7, 1. Oktober 2001 (2001-10-01), Seiten 85-907, XP002512604 Gefunden im Internet: URL:http://www.springerlink.com/content/t1 ahc3950gn9n19d/fulltext.pdf>**

- **ALM B., KNITTER R. ET AL.: "Development of a ceramic micro heat exchanger - Design, Construction and Testing" CHEM. ENG. TECHNOL., Bd. 28, Nr. 12, 22. November 2005 (2005-11-22), Seiten 1554-1560, XP002512605 Gefunden im Internet: URL:http://www3.interscience.wiley.com/cgi -bin/fulltext/112161803/PDFSTART>**
- **BAUER W ET AL: "Development of a rapid prototyping process chain for the production of ceramic microcomponents" JOURNAL OF MATERIALS SCIENCE, KLUWER ACADEMIC PUBLISHERS, BO, Bd. 37, Nr. 15, 1. August 2002 (2002-08-01), Seiten 3127-3140, XP019209662 ISSN: 1573-4803**

Bemerkungen:
Die Akte enthält technische Angaben, die nach dem Eingang der Anmeldung eingereicht wurden und die nicht in dieser Patentschrift enthalten sind.

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von Formkörpern mit katalytischen Eigenschaften, die als Reaktoreinbauten in heterogen katalysierten chemischen Reaktionen verwendet werden.

**Hintergrund der Erfindung**

Die heterogene Katalyse spielt eine zentrale Rolle in der modernen industriellen Chemie. Heterogene Katalysatoren bestehen häufig aus Metallen und/oder Metalloxiden, mit deren Oberfläche die Reaktanden der zu katalysierenden Reaktion in Wechselwirkung treten. Neben der Natur dieser Wechselwirkung kommt dem Transport der Reaktanden zu den aktiven Zentren auf der Oberfläche und der Entfernung der Produkte von der Oberfläche eine entscheidende Bedeutung zu. Außerdem muss die frei werdende Reaktionswärme möglichst rasch abgeführt oder benötigte Wärme zugeführt werden.

*Bauformen von Katalysatoren*

Aufgrund der Vielfalt der heterogen katalysierten Reaktionen und der bisweilen sehr unterschiedlichen Reaktionsbedingungen haben sich für heterogene Katalysatoren verschiedene Bauformen etabliert, welche für die jeweilige Reaktion einen optimalen Stoff- und Wärmetransport gewährleisten sollen. In Schüttungen liegt der Katalysator ungeordnet im Reaktor vor, in einer Packung ausgerichtet und geordnet in den Reaktor eingebaut. Am weitesten verbreitet ist die Verwendung von Katalysatoren in Form von Granulaten, Strängen, Tabletten, Ringen oder Split, welche als Schüttung in den Reaktor eingebracht werden. Derartige Formkörper können sowohl den gesamten Reaktorraum ausfüllen als auch durch Abstandshalter innerhalb des Reaktors in verschiedenen Etagen angeordnet sein. Am Reaktoreingang oder an anderen Stellen im Reaktor können zusätzliche Mischeinrichtungen, Wärmetauscher oder andere Einbauten angeordnet sein. In Strömungsrichtung können zur Optimierung der Ausbeute an gewünschtem Produkt verschiedene Katalysatorschüttungen (z.B. verschiedene Bauformen, Katalysatoren mit unterschiedlicher Menge an Aktivkomponente oder mit verschiedenen Dotierungen) verwendet werden. Nachteilig bei dieser Art der Verwendung von Katalysatoren ist jedoch, dass die beschriebenen Schüttungen in der Regel zu einem starken Druckverlust im Reaktor führen. Außerdem kann es leicht zur Bildung von Kanälen sowie zur Ausbildung von Zonen mit stagnierender Gas- und/oder Flüssigkeitsbewegung kommen, so dass der Katalysator nur sehr ungleichmäßig belastet wird. Daneben kann auch der bei einem Katalysatorwechsel erforderliche Aus- und Einbau der Formkörper aufwändig sein, beispielsweise bei Rohrbündel- respektive Salzbadreaktoren mit einer großen Anzahl an Rohren.

Zur Verringerung des Druckverlustes wurden Reaktoreinbauten beschrieben, welche eine zu dichte Packung des Katalysators im Reaktor verhindern sollen. In WO 03/047747 wird eine Mehrkanalpackung aus Metall beschrieben, bei der mehrere Packungslagen mit unterschiedlicher geometrischer Oberfläche alternierend zusammengesetzt werden, in die der Katalysator eingefüllt wird. Die Packungslagen werden so ausgewählt, dass der Katalysator lediglich in die Kanäle der Packung mit niedrigerer spezifischer Oberfläche, die so genannten Katalysatorkanäle, rieseln kann. In die Lagen mit höherer spezifischer Oberfläche kann der Katalysator aus geometrischen Gründen nicht rieseln. Dieses System findet unter anderem in der Reaktivdestillation seine Anwendung. Nachteilig ist hierbei, dass aufgrund der erhöhten Porosität der Packung ein größeres Reaktorvolumen benötigt wird und die Einbauten eine große metallische Oberfläche bieten. Es ist zusätzliches Metall in Form der Packung nötig, was zu erhöhten Materialkosten führt. Weiterhin kann es zur Korrosion kommen und Metallionen können herausgelöst werden.

Katalysatoren, die aufgrund einer geringen Größe nicht als Schüttung von Formkörpern verwendet werden können, lassen sich häufig durch Einbau in durchlässige Behältnisse, etwa in Gewebetaschen, einsetzen. Solche Taschen bestehen aus einem Drahtgewebe (z. B. die Bauform KATAPAK® K der Sulzer AG, CH-8404 Winterthur, vgl. J.-P. Stringaro et al., Chemical Plants and Processing 1992, July, S. 6 bis 10) und werden als katalytisch aktive Einbauten in Reaktivdestillationen eingesetzt. Weitere Ausführungsformen werden von Montz und CDTech angeboten und funktionieren nach einem ähnlichen Prinzip (z. B. sogenannte "Bales" der CDTech, Houston, USA). Die Verwendung dieser Packungen hat den Nachteil, dass in solchen Verfahren, in denen der Katalysator von einem Gas/Flüssigkeitsgemisch umgeben ist, die passende Flüssigkeitsberieselungsdichte genau eingehalten werden muss, was sich in der Praxis als schwierig erweist. Dies führt bei zu hohen Flüssigkeitsströmen zu einem Überströmen der Katalysatortaschen, ein zu geringer Flüssigkeitsstrom führt dagegen zum "Austrocknen" des Katalysators.

Für bestimmte Anwendungen können Katalysatoren auch in Form von Monolithen mit durchgehenden Kanälen, Waben- oder Rippenstruktur eingesetzt werden, wie sie beispielsweise in DE-A-2709003 beschrieben sind. Monolithe bieten auf Kosten der Quervermischung einen sehr geringen Druckverlust. Dies kann in der Praxis zu einer inhomogenen Verteilung von Konzentrationen, Temperaturen und Strömungsgeschwindigkeiten sowie einer unzureichenden radialen Wärmedispersion führen. Nachteil ist meist das geringe Verhältnis von Katalysator(-träger)masse pro Reaktorvolumen. Trotz der beschriebenen Nachteile konnte sich die Bauform des Monoliths bei Abgaskatalysatoren mangels besserer Alternativen für Kraftfahrzeuge durchsetzen.

Es besteht somit ein Bedarf nach Formkörpern mit katalytischen Eigenschaften, welche als Reaktoreinbauten verwendet werden können und hinsichtlich ihrer Geometrie für die jeweiligen Reaktionsbedingungen optimiert sind. Dabei sollen sie möglichst eine hohe Quervermischung, d. h. einen Ausgleich von Konzentrationen und Temperaturen im Reaktor, sowie eine nur geringe Rückvermischung bieten, einen ausreichend großen Massen- und Wärmetransport erlauben und nur zu einem möglichst geringen Druckverlust führen und die eventuell auftretende positive oder negative Reaktionswärme ab- bzw. zuführen.

*Fertigungsverfahren "Rapid Prototyping"*

Dem Fachmann ist unter dem Begriff "Rapid Prototyping" (RP) ein Fertigungsverfahren für Musterbauteile bekannt, mit dem auch sehr detailreiche Werkstücke nahezu beliebiger Geometrie aus vorhandenen CAD-Daten möglichst ohne manuelle Umwege oder Formen direkt und schnell hergestellt werden können. Das Prinzip des Rapid Prototyping beruht auf dem schichtweisen Aufbau von Bauteilen unter Nutzung physikalischer und/oder chemischer Effekte. Dabei haben sich zahlreiche Verfahren wie z.B. das Selective Laser Sintering (SLS) oder die Stereolithographie (SLA) etabliert. Die Verfahren an sich unterscheiden sich in Bezug auf das Material, mit welchem die Schichten aufgebaut werden (Polymere, Harze, Papierbahnen, Pulver etc.) und die Methode, mit welcher diese Materialien verbunden werden (Laser, Heizung, Binder oder Bindersysteme etc.). Die Verfahren sind in zahlreichen Veröffentlichungen beschrieben.

Eines der Rapid Prototyping Verfahren ist in EP-A0431 924 beschrieben und umfasst den schichtweisen Aufbau von dreidimensionalen Bauteilen aus Pulver und Bindemittel. Nicht gebundenes Pulver wird am Ende entfernt und es bleibt das Werkstück in der gewünschten Geometrie zurück.

Aus WO 2004/112988 ist bekannt, dass auch mehr als ein pulverförmiges Ausgangsmaterial verwendet werden kann, und US 2005/0017394 offenbart die Verwendung von Aktivierungsmitteln, welche die Aushärtung des Binders induzieren.

R. Knitter et al. beschreiben u. a. in Galvanotechnik 1/2004, S. 196 bis 204 keramische Reaktoren für den Einsatz in der Mikroreaktortechnik. Die Formgebung erfolgt dabei über eine Rapid-Prototyping-Prozesskette, wobei allerdings als zusätzliche Zwischenschritte 1.) das durch Stereolithographie erhaltene Urmodell aus Kunststoff in eine Silikonform umkopiert wird, welche dann 2.) als Abformwerkzeug im Niederdruck-Spritzguss mit einem keramischen Schlicker fungiert. Die erhaltenen keramischen Mikroreaktoren dienen u. a. als Katalysatorträger, auf welche die eigentlichen Katalysatoren beispielsweise als Suspension aufgebracht werden. Der Nachteil dieses Herstellverfahrens ist der zusätzliche Verfahrensschritt, bei dem zunächst die Negativform hergestellt wird, bevor die endgültige Produktion in Form von Abgiessen erfolgt.In cfi/Ber. DKG 82 (2005) Nr. 13, S. 99 bis 103 offenbaren U. Kaufmann et al. die Herstellung von 3D-Keramikbauteilen mittels eines Verfahrens, welches auf dem schichtweisen Aufbau der Bauteile in einem Pulverbett basiert. Mögliche Anwendungen dieser Bauteile als Implantate werden diskutiert.

Knitter et al. (Lab Chip, 2004, Bd. 4, Seiten 378-383), Knitter et al. (Microsystem Technologies, 2001, Bd. 7, Seiten 85-90), Alm et al. (Chem. Eng. Technol. 2005, Bd. 28, Nr. 12, Seiten 1554-1560) und Bauer et al. (Journal of Materials Science, 2002, Bd. 37, Seiten 3127-3140) offenbaren ein Verfahren zur Herstellung von Rohlinge mittels eines Rapid-Prototyping-Verfahrens. Diese Rohlinge werden benutzt um Formkörper durch Spritzgießen herzustellen.

**Aufgabe und Gegenstand der Erfindung**

Es war eine Aufgabe der vorliegenden Erfindung, die Verwendung von Katalysatoren in heterogen katalysierten chemischen Reaktionen zu verbessern und die genannten Nachteile bekannter Katalysatoren zu vermeiden. Bei der Verwendung der Katalysatoren sollte es zu einem geringeren Druckverlust im Vergleich zu Schüttungen, vorzugsweise zu einer möglichst hohen Quervermischung, außerdem zu einer nur geringen Rückvermischung entgegen der Strömungsrichtung und zu einem ausreichend großen Massen- und Wärmetransport, einschließlich eines radialen Wärmetransports kommen.

Gegenstand der vorliegenden Erfindung ist daher ein Verfahren zur Herstellung von Formkörpern mit katalytischen Eigenschaften gemäss Anspruch 1, die als Reaktoreinbauten in heterogen katalysierten chemischen Reaktionen verwendet werden.

Das Bindemittel oder Bindemittelgemisch wird bevorzugt so gewählt, dass das Bindemittel selbst oder dessen Rückstände bei der späteren Anwendung als Katalysator(träger) die chemische Reaktion nicht oder nicht negativ beeinflusst.

Die Aufgabe wird somit erfindungsgemäß gelöst durch ein Verfahren zur Herstellung von Formkörpern mit katalytischen Eigenschaften, welche hinsichtlich ihrer Geometrie für die jeweiligen Strömungs- und Reaktionsbedingungen im Reaktor optimiert sind. Entsprechend den erforderlichen Reaktionsbedingungen können die Reaktoreinbauten für die Anwendung maßgeschneidert hergestellt werden, wie es mit herkömmlichen Techniken wie Extrudieren oder Spritzguss nicht möglich ist. Der Vorteil der Rapid-Prototyping-Technologie gegenüber dieser konventionellen Fertigungstechniken besteht darin, dass theoretisch jede beliebige Geometrie, auch komplexe Bauteile beispielsweise mit Hohlräumen oder Mikrokanälen, mittels eines CAD-Datensatzes computergesteuert in das entsprechende dreidimensionale Bauteil ohne vorherige Abformung in Gussformen, ohne Ausschneiden, Ausfräsen, Schleifen, Löten etc. umgesetzt werden kann. Auf diese Weise ist die Herstellung von Reaktoreinbauten möglich, die aufgrund ihrer optimierten Geometrie Vorteile für den Stoff- und Wärmetransport bei chemischen Reaktionen gegenüber herkömmlicher Reaktoreinbauten bieten. Diese Prozessintensivierung bringt höhere Ausbeuten, Umsätze und Selektivitäten sowie eine sichere Reaktionsführung mit sich und kann durch verringerte Apparategrößen oder gesenkte Katalysatormengen zu Kosteneinsparungen für bestehende oder neue Verfahren in der chemischen Industrie führen.

Beschreibung

Die durch das erfindungsgemäße Verfahren hergestellten Formkörper erhalten ihre katalytischen Eigenschaften entweder dadurch, dass sie aus einem katalytisch aktiven Material oder einer Vorstufe davon hergestellt werden oder sie bestehen aus einem inerten Material (welches als Träger dient), auf das eine katalytisch aktive Komponente aufgebracht wird (siehe Verfahrensschritt c). Es können auch auf bereits katalytisch aktives Material weitere katalytisch aktive Komponenten, beispielsweise Metalle oder Promotoren, aufgebracht werden.

*Materialien*

Als Material zur Herstellung des erfindungsgemäße Formkörper eignen sich vorzugsweise Metalloxide, Metalloxidhydroxide, Hydrotalcite, Spinelle, Perowskite, Metalle, Legierungen, Metallphosphate, natürlich vorkommende und synthetische Schicht- oder Gerüstsilicate wie Tonmineralien, Zeolithe, Glimmer, Feldspäte, keramische Werkstoffe wie Steatit, Cordierit, Porzellan, Carbide wie SiC, $B_4C$, Nitride wie $Si_3N_4$, AIN, Gläser u. ä. Bevorzugte Materialien sind Siliciumdioxid, Aluminiumoxid, Titandioxid, Zirconiumdioxid, Magnesiumoxid, Calciumoxid, Mischmetalloxide, Hydrotalcite, Spinelle, Perowskite, Metallphosphate, Silikate, Zeolithe, Steatit, Cordierit, Carbide, Nitride oder Mischungen oder Gemische daraus. Besonders bevorzugt sind Siliciumdioxid, Aluminiumoxid, Titandioxid, Zirconiumdioxid, Magnesiumoxid, Calciumoxid, Steatit, Cordierit sowie Mischoxide wie z.B. $SiO_2$-$Al_2O_3$, $ZnO$-$Al_2O_3$-$CuO$, $SiO_2$-$TiO_2$, $ZrO_2$-$SiO_2$, $ZrO_2$-$Al_2O_3$ oder Gemische von zwei oder mehreren dieser Materialien. So-6 fern die eingesetzten Materialien in mehreren Modifikationen existieren, können die verschiedenen Modifikationen einzeln oder im Gemisch zum Einsatz kommen, es können auch Phasenumwandlungen durch die im Herstellprozess ggf. durchgeführte thermische Behandlung ablaufen. Als Beispiele für einsetzbare Materialien in unterschiedlichen bekannten Modifikationen seien genannt $\alpha$-$Al_2O_3$, $\gamma$-$Al_2O_3$, $\theta$-$Al_2O_3$, monoklines $ZrO_2$, kubisches $ZrO_2$, tetragonales $ZrO_2$, $TiO_2$ in der Rutilstruktur, $TiO_2$ in der Anatasstruktur, $SiO_2$ in mehreren stabilen bzw. metastabilen Modifikationen, z.B. $\alpha$- und $\beta$-Quarz, $\alpha$- und $\beta$-Cristobalit, $\alpha$- und $\beta$-Tridymit usw.

*Pulverform*

In dem erfindungsgemäß zu verwendenden Rapid-Prototyping-Verfahren werden pulverförmige Ausgangsmaterialien eingesetzt, die mit Bindemittel eingesetzt werden. Es können sowohl monodisperse wie auch polydisperse Pulver eingesetzt werden. Dabei können mit feineren Teilchen naturgemäß dünnere Schichten realisiert werden, wodurch für den Aufbau eines gewünschten Formkörpers eine größere Anzahl von Schichten und damit eine höhere räumliche Auflösung möglich ist als mit gröberen Teilchen. Es werden Pulver mit einer mittleren Teilchengröße im Bereich von 0,5 $\mu$m bis 450 $\mu$m, bevorzugt von 1 $\mu$m bis 300 $\mu$m und besonders bevorzugt von 10 bis 100 $\mu$m. Das einzusetzende Pulver kann, wenn dies erforderlich ist, auch gezielt vorbehandelt werden, z.B. durch mindestens einen der Schritte Calcinieren, Kompaktieren, Mischen, Granulieren, Sieben, Agglomerieren oder Mahlen auf eine bestimmte Teilchengrößenfraktion.

*Herstellung*

Das erfindungsgemäß zu verwendende Rapid-Prototyping-Verfahren besteht bekanntermaßen aus den folgenden Schritten, die so oft zu wiederholen sind, bis der gewünschte Formkörper vollständig aus den einzelnen Schichten aufgebaut ist. Ein pulverförmiges Ausgangsmaterial oder Ausgangsmaterialgemisch wird in einer dünnen Schicht auf eine Unterlage aufgetragen und anschließend an ausgewählten Stellen dieser Schicht mit einem Bindemittel und eventuell erforderlichen Hilfsmitteln versetzt, oder bestrahlt oder auf andere Art behandelt, so dass das Pulver an diesen Stellen verbunden wird, wodurch das Pulver sowohl innerhalb der Schicht als auch mit den angrenzenden Schichten verbunden wird. Nachdem dieser Vorgang so oft wiederholt wurde, dass die gewünschte Form des Werkstücks vollständig in dem gebildeten Pulverbett abgebildet ist, wird das nicht durch das Bindemittel verbundene Pulver entfernt, und es bleibt das verbundene Pulver in der gewünschten Form zurück.

*Bindemittel und Hilfsmittel*

Als Bindemittel kann generell jedes Material verwendet werden, welches geeignet ist, benachbarte Partikel des pulverförmigen Ausgangsmaterials fest miteinander zu verbinden. Bevorzugt sind hierbei Sole oder kolloidale Lösungen von Siliciumdioxid oder Alumosilikaten, Kieselsäure oder deren Ester, Siloxane oder Silikone. Weiterhin als Bindemittel geeignet sind organische Materialien, besonders solche, die sich vernetzen lassen oder auf andere Art und Weise eine kovalente Bindung miteinander eingehen können, beispielsweise Phenolharze, Polyisocyanate, Polyurethane, Epoxyharze, Furanharze, Harnstoff-Aldehyd-Kondensate, Furfurylalkohol, Acrylsäure- und Acrylatdispersionen, polymere Alkohole, Peroxide, Kohlenhydrate, Zucker, Zuckeralkohole, Proteine, Stärke, Carboxymethylcellulose, Xanthan, Gelatine, Polyethylenglycol, Polyvinylalkohole, Polyvinylpyrrolidon oder Mischungen davon.

Ferner sind bevorzugt Phosphate oder Polyphosphate als Bindemittel geeignet. Bei ihrer Anwendung kann die nachfolgende Temperaturbehandlung bei 300°C bis 700°C erfolgen.

Die Bindemittel werden flüssig entweder in gelöster oder dispergierter Form eingesetzt, wobei sowohl organische Lösungsmittel (z. B. Toluol) als auch Wasser verwendet werden können. Es werden bevorzugt Bindemittel eingesetzt, die selbst oder deren Rückstände bei der späteren Anwendung als Katalysator(träger) die chemische Reaktion nicht oder nicht negativ beeinflussen.

Die Anwendung der Bindemittel erfolgt beispielsweise über eine Düse, einen Druckkopf oder eine andere Apparatur, die eine genaue Platzierung möglichst kleiner Tropfen des Bindemittels auf der Pulverschicht erlaubt. Das Verhältnis von Pulvermenge zu Bindemittelmenge variiert in Abhängigkeit von den verwendeten Substanzen und liegt in der Regel im Bereich von etwa 40 : 60 bis etwa 99 : 1 Gewichtsteilen, bevorzugt im Bereich von etwa 70 : 30 bis etwa 99 : 1 Gewichtsteilen, besonders bevorzugt im Bereich von etwa 85:15 bis etwa 98 : 2 Gewichtsteilen.

Des Weiteren können gegebenenfalls ein oder mehrere Hilfsmittel zum Einsatz kommen, die beispielsweise einen Einfluss auf die Vernetzung der Bindemittel haben können oder als Härter dienen. Als Hilfsmittel werden insbesondere Wasser, anorganische Säuren oder Basen, aber auch schnell hydrolysierbare oder kondensierbare Verbindungen wie Metallalkoxide (z. B. Titanalkoholate) eingesetzt. Die Hilfsmittel können separat appliziert werden, sie können aber gegebenenfalls auch dem Pulverbett und/oder dem Bindemittel bzw. der Bindemittel-Lösung zugesetzt werden.

*Temperaturbehandlung*

In Schritt b) wird die Temperaturbehandlung als Sintern und/oder als Calcinieren ausgelegt. Das Sintern bzw. Calcinieren erfolgt dabei bei Temperaturen im Bereich von vorzugsweise 350 bis 2100°C. Die Temperaturbehandlung wird derart durchgeführt, dass zunächst eine Entbinderung, d. h. Entfernung des Bindemittels, durchgeführt wird, woran sich das Sintern und/oder Calcinieren anschließt. Definitionen für Sintern und Calcinieren sind nachstehend angegeben.

*Geometrie der Formkörper*

Die Geometrie der Formkörper richtet sich nach den Erfordernissen des jeweiligen Anwendungsgebiets und kann aufgrund der Flexibilität des pulverbasierten Rapid-Prototyping-Verfahrens in weiten Bereichen variiert werden. Bevorzugt ist eine Form anzustreben, bei deren Verwendung als Katalysator in heterogen katalysierten chemischen Reaktionen es zu einer möglichst hohen Quervermischung sowie zu einem möglichst geringen Druckverlust im Reaktor, außerdem zu einer nur geringen Rückvermischung entgegen der Strömungsrichtung und zu einem ausreichend großen Massen- und Wärmetransport kommt, einschließlich des Wärmetransports nach außen. Vorteilhafte Formen können sich beispielsweise an der aus der Destillationstechnik bekannten Packungen in Kreuzkanalstrukturen orientieren, die dem Fachmann bekannt sind und von Herstellern wie Montz, Sulzer oder Kühni angeboten werden. Diese Formkörper weisen Kanäle auf, die von dem Reaktionsmedium durchströmt werden, wobei die Kanäle in einem Winkel im Bereich von 0° bis 70°, bevorzugt 30° bis 60° gegen die Hauptströmungsrichtung geneigt sind. Die Kanäle können eine beliebige Querschnittsform aufweisen, wobei quadratische, rechteckige oder runde Querschnittsformen bevorzugt sind.

Die Packungen können bevorzugt als Mehrkanalpackungen ausgeführt sein, die Kanäle aufweisen, in denen bevorzugt die chemische Reaktion stattfindet, und zusätzlich Kanäle beinhalten, in denen bevorzugt der konvektive Wärmetransport stattfindet. Die Kanäle für den Wärmetransport sind bevorzugt stärker geneigt und weisen bevorzugt einen hydraulischen Durchmesser auf, der um den Faktor 2 - 10 größer ist als der Durchmesser der Kanäle für die Katalyse.

Die Mehrkanalpackungen werden bevorzugt mit Perforationen in den einzelnen Lagen, beispielsweise als Streckmetall, angefertigt, um einen besseren Stoffaustausch zu gewährleisten.

Aber auch monolithische Strukturen mit vorteilhaft angeordneten Löchern und/oder Öffnungen, welche die einzelnen Kanäle miteinander verbinden und somit eine Quervermischung intensivieren, haben gegenüber den existierenden Formen entscheidende Vorteile. Beispiele für solche Monolithe sind ausführlich im Artikel der Emitec (siehe Internet: http://www.emitec.com/index.php?lang=de&mid=d5&doc=s7) beschrieben. Der Nachteil der dort beschriebenen Bauformen ist jedoch, dass sie aufgrund des Herstellungsverfahrens lediglich für die Herstellung metallischer Monolithe und nicht keramischer Formen geeignet sind ist. Außerdem ist der radiale Wärmetransport nach außen problematisch und aufgrund der Spalte zwischen Monolith und Reaktormantel (bzw. bei vielen über den Querschnitt parallel durchströmten Monolithen auch zwischen den Monolithen) kann es zur Bypassbildung kommen.

*Einbau der Formkörper in Reaktoren*

Die erfindungsgemäß verwendeten Formkörper werden als Reaktoreinbauten verwendet. Dabei können sie in unausgerichteter Form als Schüttung oder in räumlich ausgerichteter Form, beispielsweise als Packung in einem kolonnenförmigen Reaktor vorliegen, wie es prinzipiell von Monolithen bekannt ist. Dabei können die erfindungsgemäß eingesetzten Formkörper bis an den Rand des (kolonnenförmigen) Reaktors reichen. Der Einbau der strukturierten Katalysatoren in den Reaktor kann auf verschiedene Weise erfolgen, z.B. in einen Rohr(bündel)reaktor durch Anordnen der zylinderförmigen Bauteile übereinander, wobei nicht notwendigerweise alle Katalysatorteile die gleiche Form, Struktur, Dotierung etc. aufweisen müssen, sondern auch vertikale/longitudinale Segmentierungen möglich sind: z. B. kann man am Reaktoreingang gering edelmetallbeladene Katalysatorform einbauen und zum Ausgang hin mehr Edelmetall auf den Strukturen vorsehen oder umgekehrt; man kann über die Reaktorlänge auch Bauteile mit unterschiedlichen Wärmetransporteigenschaften einbauen usw.. Außerdem kann der Einbau auch segmentiert in der Querrichtung erfolgen (wie z. B. bei Tortenstückchen durch 4 Viertel-Zylinder oder durch eine Anzahl von sechseckigen, honigwabenähnlichen Bauteilen, die man nebeneinander anordnet). Man kann die Bauteile auch als unregelmäßige Schüttung einbauen.

*Einbau der Formkörper als Schüttung*

Gängige Formkörper weisen zuweilen eine so geringe Größe auf, dass die Gefahr des Aufwirbelns bzw. des Bruchs oder Abriebs besteht. Erfindungsgemäße Formkörper können bei sonst gleichen katalytischen, Stoff- und Wärmetransport bzw. Druckverlust-Eigenschaften größer sein, so dass beim Einsatz einer Schüttung dieser Formkörper diese Gefahr des Aufwirbelns beseitigt werden kann.

*Einbau der Formkörper als Packung*

Die erfindungsgemäß verwendeten Formkörper können auch in räumlich ausgerichteter Form beispielsweise als Packung als Reaktoreinbauten eingesetzt werden. Dabei kann ein kolonnenförmiger Reaktor, der die Formkörper als Packungen enthält, von einem Reaktionsmedium durchströmt werden, wobei die Packung aus einem Element besteht oder aus einer Mehrzahl von Elementen, die in longitudinaler Richtung angeordnete Packungsabschnitte bilden, jedes Packungselement aus einer Mehrzahl von longitudinal ausgerichteten Lagen aufgebaut ist, jede Lage dicht angeordnete Kanäle enthält, die Kanäle benachbarter Lagen sich kreuzen und die Kanäle innerhalb eines Packungselements seitliche Wände aufweisen, die für die Fluide durchlässig oder undurchlässig sind. Es ist auch möglich, die beschriebenen Formkörper als Schüttung einzusetzen.

Die Packungen werden bevorzugt zur Unterdrückung der Randgängigkeit entweder a) mit einer Randabdichtung ausgestattet, um eine gleichmäßige Durchströmung über den gesamten Packungsquerschnitt zu gewährleisten, oder b) besitzen bevorzugt eine Struktur, die keine höhere Porosität am Rand aufweist.

*Beispiele für Geometrie*

Geeignete Formen bzw. Strukturen der erfindungsgemäß eingesetzten Formkörper sind beispielsweise in folgenden Schriften von den Firmen Montz und Sulzer beschrieben. Diese Strukturen können in Form keramischer Werkstoffe erfindungsgemäß als Katalysatoren oder Katalysator-Träger eingesetzt werden. Beispielsweise sind die Strukturen zu nennen, die in WO 2006/056419, WO 2005/037429, WO 2005/037428, EP-A-1 362 636, WO 01/52980 bzw. EP-B-1 251 958, DE-A-38 18 917, DE-A-32 22 892, DE-A-29 21 270, DE-A-29 21 269, CA-A-10 28 903, CN-A-1 550 258, GB-A-1 186 647, WO 97/02880, EP-A-1 477 224, EP-A-1 308 204, EP-A-1 254 705, EP-A-1 145 761, US 6,409,378, EP-A-1 029 588, EP-A-1 022 057 und WO 98/55221 beschrieben sind.

Ein beispielhafter derartiger Formkörper weist z. B. eine Vielzahl etwa senkrecht angeordneter, mit ihren Seitenflächen aneinander liegender gewellter Platten bzw. Ränder, deren dicht nebeneinander liegende Rippen von oben nach unten etwa bogenförmig verlaufen, auf, wobei die Rippen zweier aneinander liegender Platten einander kreuzen, wobei die Rippen im oberen Bereich einer Platte gerade und schräg zum oberen, insbesondere waagerechten Plattenrand und im unteren Bereich der Platte bogenförmig gekrümmt verlaufen, die Längslinie der oberen Enden der Rippen mit dem oberen, insbesondere waagerechten Plattenrand einen Winkel von 30 bis 70°, vorzugsweise von 45 bis 60° bildet, die Längslinie der unteren Enden der Rippen mit dem unteren, insbesondere waagerechten Plattenrand einen Winkel von 75 bis 90°, vorzugsweise von 80 bis 85° bildet, wobei die Längslinie in die gleiche oder in die entgegen gesetzte Richtung der Rippen am oberen Ende weisen kann. Eine derartige Ausführungsform ist beispielsweise in EP-B-1 251 958 von der Firma Montz beschrieben. Es können auch oben und unten gebogene Rippen vorgesehen werden, wie sie z. B. von der Firma Sulzer angeboten werden.

Ein weiterer für die Anwendung als optimierte Reaktoreinbauten geeignete Formkörper liegt in Form einer Kreuzkanalpackung vor, wobei die Packung aus vertikalen Lagen zusammengesetzt ist, die aus gewellten oder plissierten, Strömungskanäle bildenden Metalloxiden bestehen, die Strömungskanäle benachbarter Lagen sich offen kreuzen und der Winkel zwischen den sich kreuzenden Kanälen kleiner als rund 100° ist. Eine derartige Kreuzkanalpackung ist beispielsweise in der EP-A-1 477 224 beschrieben, siehe auch die dortige Winkeldefinition.

Beispiele der als Formkörper verwendbarer Packungen sind Sulzer Gewebepackungen BX, Sulzer Lamellenpackungen Mellapak, Hochleistungspackungen wie Mellapak Plus, Strukturpackungen von Sulzer (Optiflow), Montz (BSH) und Kühni (Rombopak) sowie Packungen von Emitec (www.emitec.com).

Die Formkörper können beispielsweise die Form der Packungstypen A3, B1, BSH, C1 und M von Montz aufweisen. Dabei sind die Packungskörper aus gewellten Bahnen (Lamellen) zusammengesetzt. Die Wellen verlaufen geneigt zur Vertikalen und bilden mit den benachbarten Lamellen sich kreuzende Strömungskanäle.

*Einsatz in Reaktionen*

Die erfindungsgemäßen, z. B. vorstehend definierten Formkörper werden vorzugsweise in einer mit einer Wärmetönung ablaufenden Reaktion, also für endotherme oder exotherme Reaktionen, eingesetzt. Bei der Reaktion kann es sich um eine Flüssigphasenreaktion, Gasphasenreaktion oder um eine mehrphasige Reaktion, beispielsweise dreiphasige Reaktion, handeln.

*Herstellung*

Die Herstellung der Formkörper erfolgt wie eingangs für das Rapid Prototyping beschrieben. Es kann auf die eingangs zitierte Literatur verwiesen werden, ferner auf Gebhardt, Rapid Prototyping, Werkzeuge für die schnelle Produktentstehung, Carl Hansa Verlag München, 2000, J. G. Heinrich, New Developments in the Solid Freeform Fabrication of Ceramic Components, cfi/Ber. DKG 66 (1999), Seiten 29 bis 35, R. Knitter, W. Bauer, Keramische Reaktoren für den Einsatz in der Mikroreaktor-Technik, Nachrichten-Forschungszentrum Karlsruhe 34 (2002), Seiten 143 bis 152, A. Nagy, R. Lenk, Rapid Prototyping-Fertigungsverfahren für die schnelle Bereitstellung keramischer Funktionsmuster, in: Kriegesmann (Herausgeber), Technische keramische Werkstoffe, 2004, ke 12/2005, Seiten 54 bis 55, Maßstäbe gesetzt im Rapid Prototyping, siehe auch "Rapid Prototyping" in www.werkstoffzentrum.de.

Nach der Fertigstellung des Formkörpers wird dieser gegebenenfalls einer thermischen Behandlung unterzogen, was auch in mehreren Stufen oder durch ein Temperaturprogramm bzw. -profil erfolgen kann. Generell erfolgt die thermische Behandlung im Bereich von etwa 300 bis 2100 °C. Beispielsweise kann das Pulverbett mit dem darin befindlichen Formkörper zunächst auf eine Temperatur im Bereich von 300 bis 700 °C, bevorzugt von 300 bis 550 °C erhitzt werden. Hierbei soll die Vernetzung des Bindemittels vervollständigt werden, z. B. durch Hydrolyse und/oder Kondensation unter Abspaltung von Wasser oder Alkoholen, und organische Bestandteile können zumindest teilweise oxidativ entfernt werden. Daran kann sich noch eine zweite Temperaturstufe anschließen, die in der Regel ein Erhitzen auf eine Temperatur von 900 bis 2100 °C, bevorzugt von 1100 bis 1800 °C umfasst. Hierbei ist man im Bereich des Sinterns, bei dem die Pulverpartikel miteinander Bindungen eingehen und so die mechanische Festigkeit des Formkörpers erhöht wird. Beim Sinterprozess kann es zu einer gewissen Schwindung kommen, was durch die CAD-Vorlage beim Drucken zu berücksichtigen ist. Das nicht durch das Bindemittel verbundene Pulver muss spätestens vor dem Sinterungsschritt entfernt werden, dies kann beispielsweise durch Druckluft oder Abblasen erfolgen. Dann bleibt das verbundene Pulver in der gewünschten Form zurück. Die zweite Temperaturstufe kann so gewählt werden, dass das resultierende Material eine hohe oder eine niedrige Porosität aufweist. Je nach den Erfordernissen der zu katalysierenden Reaktion können mechanische Stabilität, Struktur und Porosität des Materials durch diesen Schritt optimiert werden.

Gemäß der Erfindung dienen die hergestellten Formkörper als Träger für Katalysatoren.

Im erfindungsgemäßen Verfahren zur Herstellung eines Formkörpers wird dieser noch durch Aufbringung mindestens einer (weiteren) katalytisch aktiven Komponente modifiziert.

Hierbei kann es sich beispielsweise um Metallsalze handeln, etwa um Hydroxide, Nitrate, Sulfate, Halogenide, Phosphate, Acetate, Oxalate oder Carbonate von Elementen wie Eisen, Aluminium, Kupfer, Nickel, Cobalt, Chrom, Vanadium, Molybdän, Titan, Zirkonium, Mangan, Zink, Palladium, Rhodium, Silber, Gold, Wolfram, Platin, Bismut, Zinn, Kalium, Natrium, Cäsium, Calcium, Barium, Magnesium, Selen, Antimon, Lanthan, Cer, Yttrium, u.ä.. Es können auch Mischungen der Salze eingesetzt werden. Auch Ammoniumsalze können zur Modifizierung eingesetzt werden, beispielsweise Ammoniumsulfat, -phosphat, -wolframat oder -vanadat wie auch Heteropolysäuren bzw. deren Salze wie Wolframatophosphorsäure, Molybdokieselsäure etc. Diese katalytisch aktiven Komponenten können beispielsweise durch Tränken der Formkörper mit einer wässrigen und/oder organischen Lösung der Metallsalze aufgebracht werden.

Falls erforderlich kann sich an die Tränkung nochmals eine thermische Behandlung anschließen, bei der die aufgebrachten Metallsalze aktiviert bzw. zersetzt werden. Es können auch nach Fertigstellung des Formkörpers washcoats in Zusammensetzungen und nach Verfahren, wie sie dem Fachmann bekannt sind, aufgebracht werden

*Verwendung als Katalysator*

Die so erhaltenen Formkörper mit katalytischen Eigenschaften können als Reaktoreinbauten für eine Vielzahl von chemischen Reaktionen eingesetzt werden. Dabei können generell alle Reaktoren, die man mit heterogenen Katalysatoren betreibt, verwendet werden, beispielsweise Festbettrohrreaktoren, Wanderbettreaktoren, Rohrbündelreaktoren, Salzbadreaktoren oder Wirbelschichtreaktoren oder als Anwendung in der Reaktivdestillation oder Reaktivextraktion. Allgemein sind alle verfahrenstechnischen Operationen möglich, bei denen eine Reaktion an einem Katalysator involviert ist. Bevorzugt sind Reaktoren für die kontinuierliche Umsetzung.

Erfindungsgemäß können die Formkörper mit katalytischen Eigenschaften für beliebige heterogen katalysierte chemische Reaktionen verwendet werden, beispielsweise Oxidationen, Ammoxidationen, Hydrierungen, Dehydrierungen, Isomerisierungen, Hydratisierungen, Dehydratisierungen, Aminierungen, Nitrierungen, Alkylierungen, Dealkylierungen, Disproportionierungen, Acylierungen, Alkoxylierungen, Epoxidationen, Veresterungen, Umesterungen, Metathesereaktionen, Dimerisierungen, Oligomerisierungen oder Umlagerungen. Dabei kann es sich sowohl um einphasige Gas- oder Flüssigkeitsumsetzungen oder um mehrphasige Reaktionen handeln (z.B. Gas-Flüssig- oder Flüssig-Flüssig-Reaktionen).

*Definitionen*

Im Zusammenhang mit der vorliegenden Erfindung sind folgende Definitionen wichtig: Das Kalzinieren bezeichnet eine Temperaturbehandlung, bei der die organischen Bestandteile aus dem Probenkörper entfernt werden.

Das Sintern bezeichnet eine Temperaturbehandlung, bei welcher benachbarte Pulverpartikel sich miteinander verbinden.

Die massenspezifische Oberfläche O bezeichnet die nach DIN-iso 9277 oder DIN 66131 durch Stickstoffadsorption mittels BET ermittelte Oberfläche des Katalysators, bezogen auf seine Masse.

Die massenspezifische Oberfläche ist materialabhängig und liegt für erfindungsgemäße Katalysatoren im Bereich von 0,25 bis 1500 $m^2/g$, vorzugsweise im Bereich von 0,5 bis 1000 $m^2/g$ und besonders bevorzugt im Bereich von 1 bis 600 $m^2/g$.

Zur Bestimmung der äußeren Oberfläche $O_{Partikel,gesamt}$ geht man fiktiv davon aus, dass das innere freie Volumen mit Feststoff aufgefüllt ist, d.h. es wird nur die Oberfläche der Partikel bzw. des porösen Mediums betrachtet. Die äußere Oberfläche wird auch als geometrische Oberfläche bezeichnet.

Analog beschreibt das Partikelgesamtvolumen $V_{Partikel,gesamt}$ das Volumen der Gesamtzahl aller Partikel, wobei das innere freie Volumen als mit Feststoff gefüllt angesehen wird.

Das Gesamt- bzw. Schüttungsvolumen $V_{Schüttung}$ ist das gesamte Volumen des porösen Mediums. Es berechnet sich, indem man ebenfalls das äußere freie Volumen fiktiv zu 0 setzt, d.h. die Schüttung wird als Festkörpervollmaterial betrachtet.

Als volumenspezifische äußere Oberfläche σ bezeichnet man das Verhältnis aus geometrischer bzw. äußerer Oberfläche der Katalysatorformkörper im Verhältnis zum Reaktorvolumen.

$$\sigma = O_{Partikel,gesamt}/V_{Schüttung}$$

Die volumenspezifische äußere Oberfläche liegt für erfindungsgemäße Katalysatoren bevorzugt im Bereich von 1 bis 10000 $m^2/m^3$, besonders bevorzugt von 10 bis 5000 $m^2/m^3$ und insbesondere von 100 bis 3000 $m^2/m^3$.

Die Porosität ε eines Katalysators beschreibt den Quotienten aus (Gesamtvolumen minus Partikelvolumen) zum Gesamtvolumen.

$$\varepsilon = (V_{Schüttung} - V_{partikel,gesamt})/V_{Schüttung}$$

Die Porosität wird in zwei Bestandteile untergliedert. Die äußere Porosität beschreibt das Lückenvolumen zwischen den verschiedenen Formkörpern. Bei Formkörpern mit großen freien Volumina innerhalb des Formkörpers zählen diese Freiräume ebenfalls zur äußeren Porosität. Ein Beispiel hierfür sind die zylinderförmigen Volumina innerhalb ringförmiger Katalysatorformkörper.

Die innere Porosität ist definiert als das Lückenvolumen innerhalb eines Formkörpers, welche dadurch entsteht, dass die Formkörper nicht vollständig aus Vollmaterial bestehen, sondern noch teilweise freie Volumina beinhalten. Diese freien Volumina innerhalb des Partikels können z.B. dadurch entstehen, dass die Partikel aus kleineren Primärpartikeln zusammengesetzt sind.

Die Porosität misst man z. B. mit Hilfe der Quecksilberporosimetrie nach DIN 66133. Die Messung liefert eine Porengrößenverteilung im Katalysator. Bei sehr geringem Überdruck wird lediglich die äußere Porosität gemessen.

Für die erfindungsgemäß eingesetzten Formkörper beträgt die Porosität vorzugsweise 10 bis 99%, besonders bevorzugt 20 bis 90% und insbesondere 25 bis 75%.

Der Sauterdurchmesser $d_S$ ist ein Maß für die Abmessung von Schüttungen bzw. allgemein von Äquivalenzpartikeln in porösen Medien. Er ist definiert als Verhältnis von sechsfachem Gesamtvolumen $V_{Partikel,gesamt}$ zur gesamten geometrischen Oberfläche $O_{Partikel,gesamt}$

$$d_S=6*V_{Partikel,gesamt}/O_{Partikel,gesamt}$$

Allgemein kann bei porösen Medien der Sauterdurchmesser einfacher als $d_S=6*(1-\varepsilon)/\sigma$ gebildet werden, wobei $\sigma$ die volumenspezifische äußere Oberfläche bedeutet.

Die erfindungsgemäß eingesetzten Formkörper haben vorzugsweise Sauterdurchmesser im Bereich von 1 bis 50 mm, besonders bevorzugt 1,5 bis 15 mm, insbesondere 1,5 bis 5 mm.

Der hydraulische Durchmesser $d_h$ hat seinen Ursprung in einem Ersatzmodell für beliebig geformte Strömungsquerschnitte. Er ist definiert als Verhältnis von vierfacher Querschnittsfläche A und Umfang U bzw. von vierfachem durchströmten Volumen $V=V_{schüttung}-V_{Partikel,gesamt}$ ZU vom Fluid benetzter Oberfläche $O_{Partikel,gesamt}$.

$$d_h=4*A/U=4*V/O_{Partikel,gesamt}$$

Damit kann ein Strömungskanal beliebigen Querschnitts auf einen Rohrquerschnitt mit Durchmesser $d_h$ zurückgeführt werden. Dieser Rohrquerschnitt weist damit dasselbe Flächen- zu Umfangverhältnis auf wie der Kanal beliebigen Querschnitts. Bei kreisrunden Rohren zum Beispiel ist der Rohrinnendurchmesser gleich dem hydraulischen Durchmesser.

Strömt durch eine Schüttung ein Fluidvolumenstrom, der lokal oder örtliche Konzentrationsgradienten aufweist, so werden diese Gradienten innerhalb der Schüttung abgebaut. Dies geschieht zum einen durch die molekulare Diffusion und zum anderen durch lokale Verwirbelungen, die einen konvektiven Stoffaustausch zur Folge haben. Darüber hinaus können Adhäsionseffekte zum Konzentrationsausgleich führen. Die letzteren beiden Effekte bezeichnet man mit Dispersion. Während Diffusionseffekte durch Stoffeigenschaften beschrieben werden können, hängen Dispersionseigenschaften zusätzlich von Strömungsgeschwindigkeit und Schüttungseigenschaften ab. Man unterscheidet radiale und axiale Dispersionsprozesse. Die axialen Dispersionseffekte können mit Hilfe einer Verweilzeitmessung quantifiziert werden. Die radiale Dispersion (Quervermischung) ist schwieriger zu ermitteln. Hierzu kann man lokal begrenzt, zum Beispiel in Schüttungsmitte, ein Tracergas zugeben. Am Ende der Schüttung muss lokal die Konzentration des Tracers bestimmt werden.

Als Peclet-Zahl (Pe) bezeichnet man den dimensionslosen Quotienten aus konvektivem Stoff- oder Wärmetransport und dem diffusiven Transport von Wärme oder Stoff. Die Peclet-Zahl ist dabei ein charakteristisches Maß für die Rückvermischung bzw. den Ausgleich von Konzentrations- oder Temperaturgradienten in axialer Richtung. Für den Fall, dass die Peclet-Zahl den Wert null erreicht, entsprechen die Verhältnisse in der durchströmten Geometrie einem ideal durchmischten Rührkessel, d.h. einem vollständig rückvermischten System. Mit zunehmender Peclet-Zahl überwiegt der axiale konvektive Transport von Wärme oder Stoff die dispersiven Effekte und im System verliert die Rückvermischung an Bedeutung. Der konvektive Transport im Zähler der Peclet-Zahl kann mit dem Durchmesser der durchströmten Struktur berechnet werden. Verwendet man anstatt des Durchmessers eine charakteristische Partikelabmessung im konvektiven Transportterm, lassen sich weitere dimensionslose Kennzahlen definieren, deren Aussagekraft bezüglich der axialen Rückvermischung jedoch identisch zu den obengenannten bleibt.

Die axiale bzw. radiale Peclet-Zahl $Pe_{ax}$ bzw. $Pe_{rad}$ ist definiert als Quotient des Produkts der freien Anströmgeschwindigkeit $u_0$ und des Partikeldurchmessers $d_S$ des geteilt durch den axialen bzw. radialen Dispersionskoeffizienten $D_{ax}$ oder $D_{rad}$. Sie ist ein Maß für das Verhältnis der Geschwindigkeiten von konvektiven und dispersiven Stofftransportprozessen.

$$Pe_{ax} = \frac{u_0 d_s}{D_{ax}}, Pe_{rad} = \frac{u_0 d_s}{D_{rad}}$$

Die freie Anströmgeschwindigkeit $u_0$ ist die über den Strömungsquerschnitt gemittelte Strömungsgeschwindigkeit unter fiktiver Abwesenheit der/des Formkörpers. Die Dispersionskoeffizienten $D_{ax}$ und $D_{rad}$ sind geometrie- bzw. schüttungsspezifische Größen, die die dispersiven Stoff- und Wärmetransporteigenschaften einer durchströmten Struktur erfassen, die nicht durch molekulare Diffusionsvorgänge hervorgerufen werden.

Für die erfindungsgemäßen Formkörper kann die Peclet-Zahl in einem Bereich von null bis zu beliebig großen Werten liegen. Für eine monodisperse Kugelschüttung ergibt sich für die axiale Peclet-Zahl bei vernachlässigbar geringer molekularer Diffusion $Pe_{ax} = 2$.

Zusätzlich zu den betrachteten Prozessen des Stoffübergangs kann auch der Wandwärmeübergang nach außen bzw. von außen betrachtet werden. Der Wandwärmeübergang stellt eine zusätzliche Hemmung dar. Dies ist begründet auf der in Schüttungen in Wandnähe größeren Porösität gegenüber dem wandfernen Inneren der Schüttung.

Die Hauptströmungsrichtung gibt im Rahmen der Erfindung innerhalb des Reaktors an, in welche Richtung sich die Fluidelemente bevorzugt bewegen. Je nach Ausführungsform des Reaktors kann sich die Hauptströmungsrichtung lokal unterscheiden, z.B. wenn Bleche innerhalb des Reaktors zur Strömungsführung eingesetzt werden. Die Hauptströmungsrichtung kann bei einem Reaktor mit einem Einlass und einem Auslass beispielsweise mit Hilfe eines Tracers ermittelt werden. Der Tracer wird sich in Form von Strömungsröhren durch den Reaktor bewegen. Die Hauptströmungsrichtung ergibt sich aus der Bewegungsrichtung dieser Strömungsröhren.

So beschreibt bespielsweise in einem zylinderförmigen Reaktor mit Einlass und Auslass an den gegenüberliegenden flachen Enden des Zylinders die Zylinderachse vom Ein- zum Auslass die Hauptströmungsrichtung. In einem Rohrbündelreaktor mit parallel angeordneten Rohren ist die Hauptströmungsrichtung ebenfalls parallel zu den Rohren ausgerichtet.

Mit Strömungsquerschnitt werden Ebenen senkrecht zur Hauptströmungsrichtung verstanden. Bei Umlenkungen im Reaktor kann sich der Strömungsquerschnitt dann z. T. auch nur über Teile des Reaktors erstrecken.

Die folgenden Beispiele sollen die Erfindung weiter erläutern, ohne sie jedoch zu limitieren.

**Beispiele**

**Beispiel 1:**

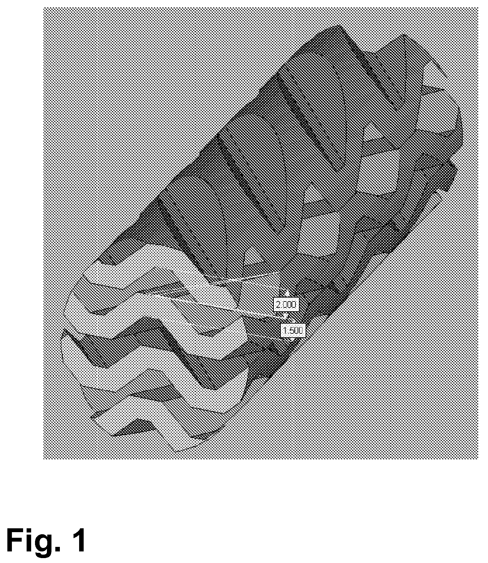

Es wurde eine dreidimensional strukturierte Form "Kreuzkanalstruktur" gemäß Figur 1 aus $\alpha$-$Al_2O_3$ hergestellt. Die Länge beträgt 50 mm, der Durchmesser 14 mm.

Basis ist ein Aluminiumoxid-Granulat CT 3000 SDP (von Almatis, 67065 Ludwigshafen) das mit Hilfe eines Turbula-Mischers (Willy A. Bachofen AG, 4058 Basel, Schweiz) mit einem Feststoff-Binder Xanthan, 200 mesh (von König & Wiegand, 40472 Düsseldorf) gemischt wird. Der Anteil des Feststoff-Binders beträgt 10 Gew.-%, bezogen auf Alumiumoxid. Das dreidimensionale Drucken wurde mit einem Z-Printer 310 (Z-Corporation, Burlington, MA 01803, USA) ausgeführt unter Verwendung einer wasserbasierten Binderlösung ZB 54 (Z-Corporation, Burlington, MA 01803, USA). Es wurde 2 % des flüssigen Binders eingesetzt. Nach dem Drucken wurden die Teile zunächst bei 60 °C über 8 h getrocknet und dann mit Pressluft freigeblasen. Der keramische Brand erfolgte bei 1600°C mit 2 h Haltezeit.

**Beispiel 2:**

In einen Becherglas werden 3,12 g $Bi(NO_3)_3 \cdot 5H_2O$ mit 3,36 g $Pd(NO_3)_2 \cdot 2H_2O$ und 48,6 mg $Co(NO_3)_2 \cdot 6H_2O$ vorgelegt. Man gibt 18,17 g destilliertes Wasser dazu sowie 9,08 g konzentrierte Salpetersäure und rührt alles für 1 h durch. In einer Petrischale werden sieben der in Beispiel 1 durch Rapid Prototyping erzeugten $Al_2O_3$-Formkörper mit einer Masse von zusammen 42,8 g vorgelegt, und die Lösung der Metallnitrate wird zugegeben. Die Formen werden in der Lösung alle 30 min gedreht und nach 3 h aus der Lösung herausgenommen. Anschließend werden die Formen getrocknet (120 °C für 4 h) und calciniert (Aufheizen mit 2 K/min auf 500 °C, 10 h bei 500 °C gehalten). Es wurden 7 Formen mit einem Gesamtgewicht von 44,0 g erhalten, die 1,4 % Bi, 1,4 % Pd und 0,01 % Co aufwiesen.

**Vergleichsbeispiel 2:**

In einen Becherglas werden 3,54g $Bi(NO_3)_3 \cdot 5H_2O$ mit 3,81 g $Pd(NO_3)_2 \cdot 2H_2O$ und 55 mg $Co(NO_3)_2 \cdot 6H_2O$ vorgelegt. Man gibt 30 g destilliertes Wasser dazu sowie 15 g konzentrierte Salpetersäure und rührt alles für 1 h durch. Diese Lösung der Metallnitrate wird zu 97 g $Al_2O_3$ in Form von 1,5 mm Stränglingen mit einer mittleren Länge im Bereich von 5 - 10 mm zugegeben. Nach der Tränkung werden die Formen getrocknet (120 °C für 4 h) und calciniert (Aufheizen mit 2 K/min auf 500 °C, 10 h bei 500 °C gehalten). Es wurden 98,2 **g** Stränglinge erhalten, die 1,5 % Bi, 1,5% Pd und 0,011 % Co aufwiesen.

**Beispiel 3:**

In einem Salzbadreaktor werden 50 ml Katalysator eingebaut, oben und unten befinden sich je eine 10 ml Schicht Steatit als Inertmaterial. Der Katalysator wird auf eine Temperatur von 350 °C gebracht. Dann werden zunächst 120 NI/h Stickstoff und 35 NI/h Luft darübergeleitet, 15 min später zusätzlich 32,5 g/h Wasser zugegeben und weitere 15 min später 22,4 g/h Cyclohexanon. Die Austräge werden gesammelt, und der Gehalt am gewünschten Reaktionsprodukt Cyclohexenon wird gaschromatografisch ermittelt. Die folgende Tabelle zeigt die Ergebnisse für die Katalysatoren aus Beispiel 2 und aus dem Vergleichsbeispiel 2 für drei verschiedene Temperaturen.

| | $m_{Kat}$ /g | Temp. /°C | Umsatz /% | Selekt. /% | Ausbeute /% |
|---|---|---|---|---|---|
| Beispiel 2 | 32 | 350 | 59,6 | 59,4 | 35,4 |
| | | 370 | 65,1 | 51,5 | 33,5 |
| | | 390 | 68,4 | 43,3 | 29,6 |
| Vergleichsbeispiel 2 | 48 | 350 | 48,6 | 31,7 | 15,4 |
| | | 370 | 48,1 | 29,7 | 14,3 |
| | | 390 | 51,0 | 25,2 | 12,8 |
| Umsatz = Umsatz an Cyclohexanon Selekt.= Selektivität zu Cyclohexenon Ausbeute = Ausbeute an Cyclohexenon | | | | | |

Trotz geringerer Katalysatormasse bei vergleichbaren Dotiergehalten wurden mit dem erfindungsgemäßen Katalysator sowohl eine höhere Selektivität wie auch ein höherer Umsatz bei gleichen Reaktionsbedingungen gefunden. Die Ausbeute war in Bezug auf das Vergleichsbeispiel mehr als doppelt so groß.

**Beispiel 4:**

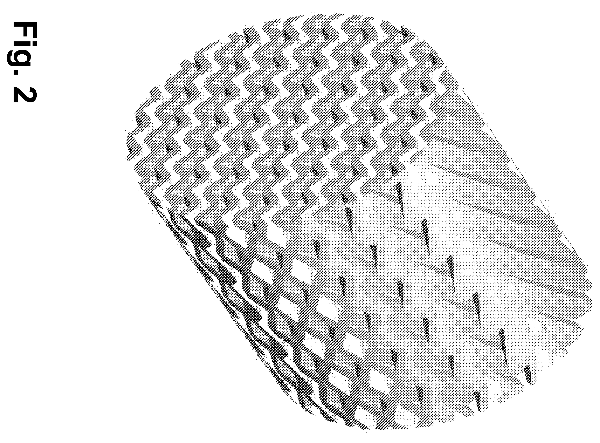

Es wurde eine dreidimensional strukturierte Form "Kreuzkanalstruktur" gemäß Figur 2 aus $SiO_2$ hergestellt. Die Länge beträgt 100 mm, der Durchmesser 80 mm.

Die Formgebung mittels Rapid Prototyping erfolgte auf der ProMetal RCT S15 (der ProMetal RCT GmbH, 86167 Augsburg) durch abwechselndes Auftragen von Pulver- und Bindemittelschichten. Als Pulver wurde Quarzsand GS 14 (von Strobel Quarzsand GmbH, 92271 Freihung) mit einem Korndurchmesser von 140 $\mu$m und als Bindemittel ein Furanharz-Säure-Gemisch verwendet. Dieses Bindemittelgemisch von Askuran 120 (von Ashland-Südchemie, 40721 Hilden) und RPT 100 (von Ashland-Südchemie, 40721 Hilden) wurde im Mischungsverhältnis 100:40 eingesetzt, wobei das Harz dem Pulver zugesetzt und der Härter über die Druckkopfdüsen dosiert wurde. Der Pulvermenge wurde eine Harzmenge von etwa 1,5 % zugesetzt. Die Formen wurden durch den Aufbau von 47 Schichten hergestellt und bei Raumtemperatur über Nacht getrocknet.

**Beispiel 5:**

Es wurde der Druckverlust gemessen, der bei Gasdurchströmung durch die aus Beispiel 4 mit Rapid Prototyping erzeugten $SiO_2$-Formkörper innerhalb eines Strömungsrohrs entsteht. Im Vergleich wurde der Druckverlust in Schüttungen aus $SiO_2$-Stränglingen (Durchmesser: 1,5 mm; mittlere Länge: 5 bis 10 mm) gemessen. Dazu wurden die Formkörper in ein Edelstahlrohr mit 80 mm Durchmesser eingebaut bzw. die $SiO_2$-Stränglinge als feste Schüttung (Schüttungshöhe: 592 mm) eingefüllt und mit Stickstoff bei 25°C und Normaldruck bei verschiedenen Strömungsgeschwindigkeiten durchströmt. Die Strömungsgeschwindigkeit wurde dabei nach und nach erhöht und die Druckdifferenz an den Reaktoreinbauten bzw. der Schüttung mittels Drucksensoren (NetScanner 9116, von Esterline Pressure Systems, Druckbereich bis 100 kPa) vermessen. Zur Auswertung wurde der Druckverlust über die Höhe der Reaktoreinbauten bzw. der Schüttung in Abhängigkeit von der Leerrohrgeschwindigkeit aufgetragen.

Die folgende Tabelle zeigt die ermittelten Druckverluste für die strukturierten Formkörper im Vergleich zu den $SiO_2$-Stränglingen für drei ausgewählte Strömungsgeschwindigkeiten.

|  | $\Delta$p/H [mbar/m] | | |
|---|---|---|---|
| Leerrohrgeschwindigkeit [m/s] | 0,1 | 1 | 10 |
| SiO$_2$-Formkörper | 0,2 | 4,7 | 280 |
| SiO$_2$-Stränglinge | 16 | 300 | 2000 |

Es ist zu erkennen, dass die durch Rapid Prototyping hergestellten strukturierten SiO$_2$-Formkörper einen wesentlich geringeren Druckverlust aufweisen als die Katalysatorschüttung aus 1,5 mm Stränglingen.

**Beispiel 6:**

Es wurde eine dreidimensional strukturierte Form "Kreuzkanalstruktur" aus $\alpha$-Al$_2$O$_3$ gemäß Figur 2 hergestellt. Die Länge beträgt 50 mm, der Durchmesser 80 mm.

Basis ist ein Aluminiumoxid-Granulat CT 3000 SDP (von Almatis, 67065 Ludwigshafen) das mit Hilfe eines Turbula-Mischers (Willy A. Bachofen AG, 4058 Basel, Schweiz) mit einem Feststoff-Binder Xanthan, 200 mesh (von König & Wiegand, 40472 Düsseldorf) gemischt wird. Der Anteil des Feststoff-Binders beträgt 10 Gew.-%, bezogen auf Alumiumoxid. Das dreidimensionale Drucken wurde mit einem Z-Printer 310 (Z-Corporation, Burlington, MA 01803, USA) ausgeführt unter Verwendung einer wasserbasierten Binderlösung ZB 54 (Z-Corporation, Burlington, MA 01803, USA). Es wurde 2 % des flüssigen Binders eingesetzt. Nach dem Drucken wurden die Teile zunächst bei 60 °C über 8 h getrocknet und dann mit Pressluft freigeblasen. Der keramische Brand erfolgte bei 1600°C mit 2 h Haltezeit.

**Patentansprüche**

1. Verfahren zur Herstellung von Formkörpern mit katalytischen Eigenschaften als Reaktoreinbauten in heterogen katalysierten chemischen Reaktionen, umfassend die Schritte:

   a) Herstellung eines Formkörpers mittels eines pulverbasierten Rapid-Prototyping-Verfahrens aus den folgenden Schritten, die so oft zu wiederholen sind, bis der gewünschte Formkörper vollständig aus den einzelnen Schichten aufgebaut ist: Auftragen eines pulverförmigen Ausgangsmaterials oder Ausgangsmaterialgemisches mit einer mittleren Teilchengröße im Bereich von 0,5 $\mu$m bis 450 $\mu$m in einer dünnen Schicht auf eine Unterlage und anschließendes Versetzen an ausgewählten Stellen dieser Schicht mit einem Bindemittel und eventuell erforderlichen Hilfsmitteln, oder Bestrahlen oder Behandeln auf andere Art, so dass das Pulver an diesen Stellen verbunden wird, wodurch das Pulver sowohl innerhalb der Schicht als auch mit den angrenzenden Schichten verbunden wird, Wiederholen dieses Vorgangs so oft, dass die gewünschte Form des Werkstücks vollständig in dem gebildeten Pulverbett abgebildet ist, Entfernen des nicht durch das Bindemittel verbundenen Pulvers, so dass das verbundene Pulver in der Form des gewünschten Formkörpers zurückbleibt,
   b) Durchführen einer Temperaturbehandlung zum Sintern bzw. Calcinieren des Formkörpers, wobei zunächst eine Entbinderung durchgeführt werden kann,
   c) Aufbringung mindestens einer katalytisch aktiven Komponente auf den Formkörper,
   d) gegebenenfalls Durchführen einer weiteren Temperaturbehandlung, wobei die Schritte b, c) und/oder d) mehrfach durchgeführt werden können.

2. Verfahren nach Anspruch 1, **dadurch gekennzeichnet, dass** in Schritt a) ein Bindemittel oder Bindemittelgemisch zum Einsatz kommt, welches selbst oder dessen Rückstände bei der späteren Anwendung als Katalysator(träger) die chemische Reaktion nicht oder nicht negativ beeinflusst

3. Verfahren nach einem der Ansprüche 1 bis 2, **dadurch gekennzeichnet, dass** in Schritt a) als Bindemittel ein Sol oder eine kolloidale Lösung von Siliciumdioxid oder Alumosilikaten, Kieselsäure, Kieselsäureester, Siloxane oder Silikone verwendet werden oder ein flüssiges Bindemittel auf wässriger Basis mit Zusatz von Vinylpolymeren oder anderen Netzmitteln verwendet wird.

4. Verfahren nach einem der Ansprüche 1 bis 3, **dadurch gekennzeichnet, dass** die Formkörper aus Siliciumdioxid, Aluminiumoxid, Titandioxid, Zirconiumdioxid, Magnesiumoxid, Calciumoxid, Mischmetalloxiden, Hydrotalciten, Spinellen, Perowskiten, Metallphosphaten, Silikaten, Zeolithen, Steatit, Cordierit, Carbiden, Nitriden oder Mischungen oder Gemischen daraus aufgebaut sind oder Phosphate oder Polyphosphate verwendet werden.

**5.** Verfahren nach einem der Ansprüche 1 bis 4, **dadurch gekennzeichnet, dass** in Schritt a) ein pulverförmiges Ausgangsmaterial mit einer mittleren Teilchengröße im Bereich von 1 $\mu$m bis 450 $\mu$m eingesetzt wird.

**6.** Verfahren nach einem der Ansprüche 1 bis 5, **dadurch gekennzeichnet, dass** in Schritt b) die Temperaturbehandlung als Calcinieren bei Temperaturen im Bereich von 350 bis 2100°C erfolgt.

**7.** Verfahren nach einem der Ansprüche 1 bis 6, **dadurch gekennzeichnet, dass** das in Schritt a) eingesetzte Pulver einer Vorbehandlung unterzogen wurde, die mindestens einen der Schritte Mahlen, Sieben, Calcinieren, Granulieren, Kompaktieren, Mischen, Agglomerieren umfasst.

**8.** Verfahren nach einem der Ansprüche 1 bis 7, **dadurch gekennzeichnet, dass** die Formkörper Kanäle aufweisen, die von einem Reaktionsmedium durchströmt werden, wobei die Kanäle in einem Winkel im Bereich von 0° bis 70°, bevorzugt 30° bis 60° gegen die Hauptströmungsrichtung geneigt sind.

**9.** Verfahren nach einem der Ansprüche 1 bis 8, **dadurch gekennzeichnet, dass** die Formkörper als Mehrkanalpackungen angeordnet werden, die Kanäle aufweisen, in denen bevorzugt die chemische Reaktion stattfindet, und zusätzlich Kanäle beinhalten, in denen bevorzugt der konvektive Wärmetransport stattfindet, wobei die Kanäle für den Wärmetransport bevorzugt stärker geneigt sind und bevorzugt einen hydraulischen Durchmesser aufweisen, der um den Faktor 2 - 10 größer ist als der Durchmesser der Kanäle für die Katalyse.

**10.** Verfahren nach Anspruch 9, **dadurch gekennzeichnet, dass** die Formkörper als Mehrkanalpackungen angeordnet werden, deren einzelne Lagen perforiert sind, um einen besseren Stoffaustausch zu gewährleisten.

**Claims**

**1.** A process for producing shaped bodies having catalytic properties as reactor internals in heterogeneously catalyzed chemical reactions, comprising the steps:

    a) production of a shaped body by means of a powder-based rapid prototyping process made up of the following steps, which are repeated until the desired shape body has been built up completely from the individual layers: application of a pulverulent starting material or starter material mixture having an average particle size in the range from 0.5 $\mu$m to 450 $\mu$m in a thin layer to a substrate and subsequent admiring at selected places on this layer with a binder and any auxiliaries required or irradiation or treatment in another way so that the powder is bonded at these places, as a result of which the powder is bound both within the layer and also to the adjoining layers; repetition of this procedure as often as necessary for the desired shape of the workpiece to have been reproduced completely in the powder bed formed, removal of the powder which has not been bound by the binder to leave the bound powder in the shape of the desired shaped body,
    b) a heat treatment to sinter or calcine the shaped body, with binder removal being able to be carried out first,
    c) application of at least one catalytically active component to the shaped body,
    d) optionally a further heat treatment,

where steps b), c) and/or d) can be carried out a number of times.

**2.** The process according to claim 1, wherein a binder or binder mixture selected so that it itself or its residues do not affect or do not adversely affect the chemical reaction in the later use as catalyst (support) is used in step a).

**3.** The process according to either claim 1 or 2, wherein a sol or a colloidal solution of silicon dioxide or aluminosilicates, silica, silicic esters, siloxanes or silicones or a water-based liquid binder with addition of vinyl polymers or other wetting agents is used as binder in step a).

**4.** The process according to any of claims 1 to 3, wherein the shaped bodies are made up of silicon dioxide, aluminum oxide, titanium dioxide, zirconium dioxide, magnesium oxide, calcium oxide, mixed metal oxides, hydrotalcites, spinels, Perovskites, metal phosphates, silicates, zeolites, steatite, cordierite, carbides, nitrides or mixtures or blends thereof or phosphates or polyphosphates are used.

**5.** The process according to any of claims 1 to 4, wherein a pulverulent starting material having an average particle size in the range from 1 $\mu$m to 450 $\mu$m is used in step a).

**6.** The process according to any of claims 1 to 5, wherein the heat treatment in step b) is carried out as a calcination at temperatures in the range from 350 to 2100°C.

**7.** The process according to any of claims 1 to 6, wherein the powder used in step a) has been subjected to a pretreatment comprising at least one of the steps milling, sieving, calcination, granulation, compacting, mixing, agglomeration.

**8.** The process according to any of claims 1 to 7, wherein the shaped bodies have channels through which a reaction medium flows and which are inclined to the main flow direction at an angle in the range from 0° to 70°, preferably from 30° to 60°.

**9.** The process according to any of claims 1 to 8, wherein the shaped bodies are configured as multichannel packings which have channels in which the chemical reaction preferentially takes place and additionally comprise channels in which convective heat transport preferentially takes place, with the channels for heat transport preferably being inclined at a greater angle and preferably having a hydraulic diameter which is 2-10 times the diameter of the channels for catalysis.

**10.** The process according to claim 9, wherein the shaped bodies are configured as multichannel packings whose individual layers are perforated to achieve better mass transfer.

**Revendications**

**1.** Procédé de fabrication d'objets façonnés présentant des propriétés catalytiques en tant qu'éléments internes de réacteurs dans le cas de réactions chimiques à catalyse hétérogène, comprenant les étapes :

a) fabrication d'un objet façonné par un procédé Rapid-Prototyping (de prototypage rapide) à base d'une poudre, à partir des étapes suivantes, qui doivent être répétées aussi souvent que nécessaire jusqu'à ce que l'objet façonné souhaité soit entièrement réalisé à partir des couches individuelles : application d'une matière de départ ou d'un mélange de matières de départ pulvérulent, ayant une granulométrie moyenne comprise dans la plage de 0,5 $\mu$m à 450 $\mu$m en couche mince sur un substrat, puis addition, en des points sélectionnés de cette couche, d'un liant et d'adjuvants éventuellement nécessaires, ou irradiation ou traitement d'une autre manière, de telle sorte que la poudre soit liée en ces points, ce en conséquence de quoi la poudre va être liée tant à l'intérieur de la couche qu'aux couches contiguës, répétition de cette opération aussi souvent que nécessaire jusqu'à ce que la forme souhaitée de la pièce soit entièrement réalisée dans le lit de poudre formé, élimination de la poudre qui n'a pas été liée par le liant, de telle sorte que la poudre liée reste sous forme de l'objet façonné souhaité,
b) mise en oeuvre d'un traitement thermique pour le frittage ou la calcination de l'objet façonné, ce à l'occasion de quoi on peut d'abord réaliser un déliantage,
c) application, sur l'objet façonné, d'au moins un composant catalytiquement actif,
d) éventuellement, mise en oeuvre d'un traitement thermique supplémentaire,

les étapes b), c) et/ou d) pouvant être mises en oeuvre à plusieurs reprises.

**2.** Procédé selon la revendication 1, **caractérisé en ce qu'**on utilise dans l'étape a) un liant ou un mélange de liants qui, par lui-même, ou les résidus de celui-ci, n'influe pas, ou n'influe pas d'une manière négative, sur la réaction chimique lors de l'utilisation ultérieure en tant que (support de) catalyseur.

**3.** Procédé selon l'une des revendications 1 à 2, **caractérisé en ce qu'**on utilise dans l'étape a) en tant que liant un sol ou une solution colloïdale de dioxyde de silicium ou d'aluminosilicates, de silice, d'un ester de l'acide silicique, de siloxanes ou de silicones, ou on utilise un liant liquide à base aqueuse, avec addition de polymères vinyliques ou d'autres mouillants.

**4.** Procédé selon l'une des revendications 1 à 3, **caractérisé en ce que** les objets façonnés sont constitués de dioxyde de silicium, d'oxyde d'aluminium, de dioxyde de titane, de dioxyde de zirconium, d'oxyde de magnésium, d'oxyde de calcium, d'oxydes métalliques mixtes, d'hydrotalcites, de spinelles, de pérowskites, de phosphates métalliques, de silicates, de zéolites, de stéatite, de cordiérite, de carbures, de nitrures ou de mélanges ou de structures mélangées de ceux-ci, ou de phosphates ou de polyphosphates.

**5.** Procédé selon l'une des revendications 1 à 4, **caractérisé en ce qu'**on utilise dans l'étape a) une matière de départ pulvérulente ayant une granulométrie moyenne comprise dans la plage de 1 μm à 450 μm.

6. Procédé selon l'une des revendications 1 à 5, **caractérisé en ce que**, dans l'étape b), le traitement thermique est réalisé sous forme d'une calcination à des températures comprises dans la plage de 350 à 2100°C.

7. Procédé selon l'une des revendications 1 à 6, **caractérisé en ce que** la poudre utilisée dans l'étape a) a été soumise à un prétraitement, qui comprend au moins l'une des étapes broyage, tamisage, calcination, granulation, compactage, mélange, agglomération.

8. Procédé selon l'une des revendications 1 à 7, **caractérisé en ce que** les objets façonnés comprennent des canaux qui sont traversés par un fluide réactionnel, les canaux étant inclinés par rapport à la direction d'écoulement principale selon un angle compris dans la plage de 0° à 70°, de préférence de 30° à 60°.

9. Procédé selon l'une des revendications 1 à 8, **caractérisé en ce que** les objets façonnés sont disposés sous forme de remplissages à plusieurs canaux, qui comprennent des canaux dans lesquels la réaction chimique a lieu d'une manière préférentielle, et qui en outre comprennent des canaux dans lesquels a lieu de préférence le transport de chaleur par convexion, les canaux destinés au transport de chaleur étant de préférence plus fortement inclinés, et présentant de préférence un diamètre hydraulique qui est d'un facteur de 2 à 10 plus grand que le diamètre des canaux destinés à la catalyse.

10. Procédé selon la revendication 9, **caractérisé en ce que** les objets façonnés sont disposés sous forme de remplissages à plusieurs canaux, dont les couches individuelles sont perforées, pour garantir un meilleur échange de matière.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03047747 A
- DE 2709003 A
- EP 0431924 A
- WO 2004112988 A
- US 20050017394 A
- WO 2006056419 A
- WO 2005037429 A
- WO 2005037428 A
- EP 1362636 A
- WO 0152980 A
- EP 1251958 B
- DE 3818917 A
- DE 3222892 A
- DE 2921270 A
- DE 2921269 A
- CA 1028903 A
- CN 1550258 A
- GB 1186647 A
- WO 9702880 A
- EP 1477224 A
- EP 1308204 A
- EP 1254705 A
- EP 1145761 A
- US 6409378 B
- EP 1029588 A
- EP 1022057 A
- WO 9855221 A

**In der Beschreibung aufgeführte Nicht-Patentliteratur**

- **J.-P. STRINGARO et al.** *Chemical Plants and Processing,* Juli 1992, 6-10
- **R. KNITTER et al.** *Galvanotechnik,* Januar 2004, 196-204
- **U. KAUFMANN.** Produktion in Form von Abgiessen erfolgt. *In cfi/Ber. DKG,* 2005, vol. 82 (13), 99-103
- **KNITTER et al.** *Lab Chip,* 2004, vol. 4, 378-383
- **KNITTER et al.** *Microsystem Technologies,* 2001, vol. 7, 85-90
- **ALM et al.** *Chem. Eng. Technol.,* 2005, vol. 28 (12), 1554-1560
- **BAUER et al.** *Journal of Materials Science,* 2002, vol. 37, 3127-3140
- Gebhardt, Rapid Prototyping, Werkzeuge für die schnelle Produktentstehung. **J. G. HEINRICH.** New Developments in the Solid Freeform Fabrication of Ceramic Components, cfi/Ber. DKG. Carl Hansa Verlag München, 1999, vol. 66, 29-35
- **R. KNITTER ; W. BAUER.** Keramische Reaktoren für den Einsatz in der Mikroreaktor-Technik. *Nachrichten-Forschungszentrum Karlsruhe,* 2002, vol. 34, 143-152
- Rapid Prototyping-Fertigungsverfahren für die schnelle Bereitstellung keramischer Funktionsmuster. **A. NAGY ; R. LENK.** Technische keramische Werkstoffe. 2004, 54-55
- *Rapid Prototyping, www.werkstoffzentrum.de*